# EUROPEAN PATENT SPECIFICATION

(11) **EP 3 531 616 B1**
(45) Date of publication and mention of the grant of the patent: **06.01.2021**
(21) Application number: 16921121.6
(22) Date of filing: 10.11.2016
(51) Int. Cl.: H04L 12/12

(54) **CABLE TRACING METHOD, AND CUSTOMER-PREMISES EQUIPMENT**
KABELVERFOLGUNGSVERFAHREN UND KUNDENSEITIGE AUSRÜSTUNG
PROCÉDÉ DE TRAÇAGE DE CÂBLE, ET ÉQUIPEMENT DE LOCAUX D'ABONNÉ

(43) Date of publication of application: 28.08.2019
(73) Proprietor: Huawei Technologies Co., Ltd., Longgang District Shenzhen, Guangdong 518129 (CN)
(72) Inventor: LIU, De, Shenzhen Guangdong 518129 (CN); ZHOU, Yong, Shenzhen Guangdong 518129 (CN); WANG, Wei, Shenzhen Guangdong 518129 (CN); CHEN, Shuhua, Shenzhen Guangdong 518129 (CN); LI, Zhiwei, Shenzhen Guangdong 518129 (CN)
(74) Representative: Gill Jennings & Every LLP
(86) International application number: PCT/CN2016/105349
(87) International publication number: WO 2018/086039

(56) References cited:
- EP-A1- 1 936 825
- EP-A1- 2 337 264
- WO-A1-2013/182414
- CN-A- 1 799 268
- CN-A- 101 114 963
- CN-A- 101 764 901
- CN-A- 105 245 350
- US-A1- 2003 035 377
- US-B1- 6 522 668

## Description

### TECHNICAL FIELD

The present invention relates to the field of communications technologies, and in particular, to a line hunting method and a customer premises equipment.

### BACKGROUND

A digital subscriber line (Digital Subscriber Line, DSL) technology is an Internet access technology providing an asymmetric transmission rate by using a copper wire telephone line. The DSL includes an asymmetric digital subscriber line (asymmetric digital subscriber line, ADSL), a very-high-data-rate digital subscriber line (very-high-data-rate digital subscriber line, VDSL), and even a Gfast technology, which may be collectively referred to as an xDSL.

In an xDSL broadband service, a terminal on a user home side is referred to as a customer premises equipment (Customer premises Equipment, CPE), and a digital subscriber line access multiplexer (Digital Subscriber Line Access Multiplexer, DSLAM) on a central office side is referred to as a central office (Central Office, CO). The DSLAM supports a relatively large quantity of ports, and each port can be connected to independent CPE. Therefore, the CPE and each line in the CO are in a one-to-one correspondence. During actual service provisioning, CPE of a user needs to be connected to an available CO line, to complete DSL activation and online, and service provisioning. During x DSL broadband service provisioning, because there are a relatively large quantity of ports on the DSLAM, the CPE needs to be connected to a port on the DSLAM Therefore, before the CPE is connected to the port on the DSLAM, a line used by the CPE needs to be determined first. Currently, when the line used by the CPE is determined, line engineering personnel needs to send a line hunting signal on the CPE by using a Toner tool, to determine the line used by the CPE by using the line hunting signal. However, in the foregoing method, operation of the line engineering personnel is required, resulting in reduced line hunting efficiency.

EP 2337264 describes a method and an apparatus for communication between an Automatic Configuration Server (ACS) and a Customer Premise Equipment (CPE) over an Internetbased network. A CPE determines in a power standby state whether an inform request messagetransmission period is received. If the inform request message transmission period is received, the CPE transitions from the power standby state to an active state and transmits an inform request message to an ACS. The CPE receives an inform response message from the ACS in response to the inform request message, and upon receiving the inform response message, transitions from the active state to the power standby state.

### SUMMARY

Embodiments of the present invention disclose a line hunting method according to claim 1 and a customer premises equipment according to claims 6 and 11, to improve line hunting efficiency.

A first aspect discloses a line hunting method. The method is applied to CPE. When it is detected that the CPE is powered on, a preset signal is generated, and the preset signal is coupled to a digital subscriber line DSL connected to the CPE, so that the preset signal is detected by using a port connected to the DSL in one or more ports of a distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

In an embodiment, the preset signal may be generated by using a signal generator, and the signal generator may be disposed on a central processing unit (Central Processing Unit, CPU) of the CPE, or may be disposed on a preset device of the CPE.

In an embodiment, before the preset signal is generated by using the signal generator, a connection between the signal generator and the DSL needs to be established first, so that the signal generated by using the signal generator can be coupled to the DSL.

In an embodiment, when it is detected that the CPE is powered on, registration information including an identifier of the CPE may be sent to a server first, to trigger the server to determine, based on the identifier, whether a DSL service of the CPE is activated, and when the DSL service is not activated, a detection instruction used to instruct the CPE to perform signal detection is sent to the CPE, the detection instruction sent by the server is received, and then the connection between the signal generator and the DSL is established according to the detection instruction. Therefore, line hunting of the CPE can be controlled by using the server.

In an embodiment, when a DSL signal sent by a DSLAM is received, or it is detected that the DSL service is activated, the connection between the signal generator and the DSL is disconnected, to prevent the signal generated by using the signal generator from affecting data transmission.

In an embodiment, the preset signal may be a sine wave signal or a square wave signal at a preset frequency.

A second aspect discloses CPE. The CPE includes units configured to perform the line hunting method according to any one of the first aspect or the possible implementations of the first aspect.

A third aspect discloses CPE. The CPE includes a processor, a memory, and a coupler, where
the memory stores a group of program code, and the processor is configured to invoke the program code stored in the memory, to perform the following operation:
when detecting that the CPE is powered on, generating a preset signal; and
the coupler is configured to couple the preset signal to a DSL connected to the CPE, so that the preset signal is detected by using a port connected to the DSL in one or more ports of a distribution frame.

A fourth aspect discloses a readable storage medium. The readable storage medium stores program code used by CPE to perform the line hunting method according to any one of the first aspect or the possible implementations of the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of a network architecture according to an embodiment of the present invention;
FIG. 2 is a schematic flowchart of a line hunting method according to an embodiment of the present invention;
FIG. 3 is a schematic diagram of a signal generated by a built-in signal generator according to an embodiment of the present invention;
FIG. 4 is a schematic diagram of a signal generated by an external signal generator according to an embodiment of the present invention;
FIG. 5 is a schematic flowchart of another line hunting method according to an embodiment of the present invention;
FIG. 6 is a schematic structural diagram of CPE according to an embodiment of the present invention;
FIG. 7 is a schematic structural diagram of another CPE according to an embodiment of the present invention; and
FIG. 8 is a schematic structural diagram of another CPE according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Embodiments of the present invention disclose a line hunting method and a customer premises equipment, to improve line hunting efficiency. Detailed descriptions are separately provided below.

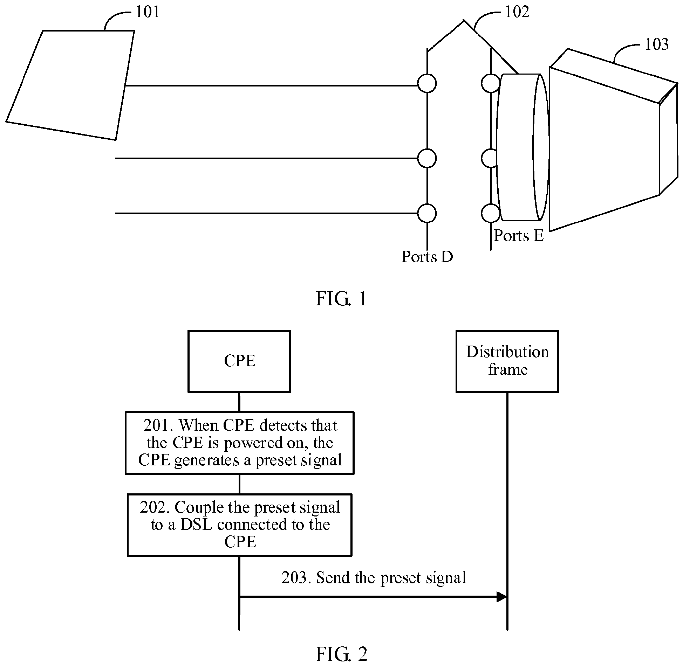

To better understand the line hunting method and the customer premises equipment according to the embodiments of the present invention, a network architecture used in the embodiments of the present invention is described below first. FIG. 1 is a schematic diagram of a network architecture according to an embodiment of the present invention. As shown in FIG. 1, the network architecture may include CPE 101, a distribution frame 102, and a DSLAM 103. The distribution frame 102 includes ports D and ports E. The ports D are connected to the CPE 101 by using lines, and the ports E are configured to connect to the DSLAM 103. When a DSL service of the CPE 101 is not activated, no connection is established between the other end of the line connected to the CPE 101, to be specific, one of the ports D of the distribution frame, and any of the ports E of the distribution frame. When the DSL service of the CPE 101 is activated, a connection is established between the other end of the line connected to the CPE 101, to be specific, the one of the ports D of the distribution frame, and one of the ports E of the distribution frame. Therefore, a line hunting process is a process of establishing a connection between a port D and a port E of the distribution frame.

Based on the network architecture shown in FIG. 1, FIG. 2 is a schematic flowchart of a line hunting method according to an embodiment of the present invention. The line hunting method is described from a perspective of the CPE 101 and the distribution frame 102. As shown in FIG. 2, the line hunting method may include the following steps.

201: When the CPE detects that the CPE is powered on, the CPE generates a preset signal.

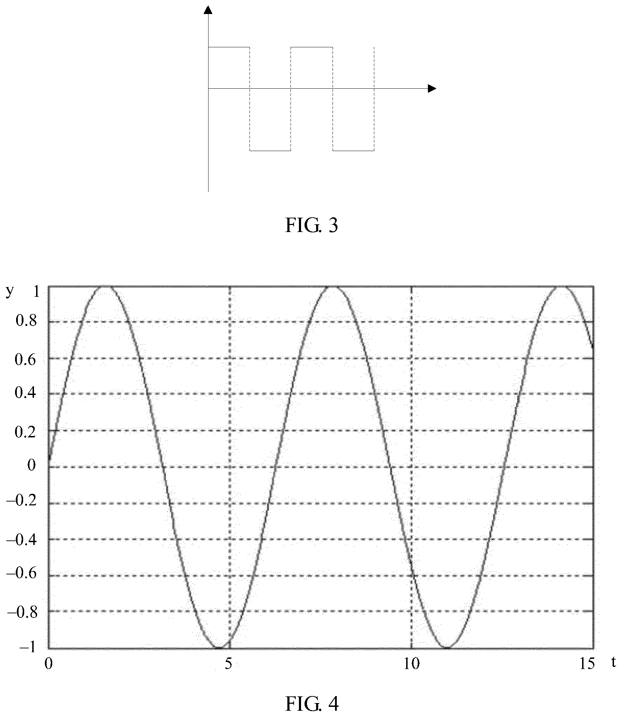

In this embodiment, when the CPE detects that the CPE is powered on, the CPE may directly generate the preset signal, and the preset signal may be generated by using a signal generator. The signal generator may be disposed on a CPU of the CPE. To be specific, the signal generator may be disposed on a module or an interface of the CPU. For example, a 1-KHz signal may be generated by controlling high and low electrical levels through general purpose input/output (General Purpose Input/Output, GPIO). Such a type of waveform is a signal simulated directly in a digital manner. The signal is usually a digital signal. FIG. 3 is a schematic diagram of a signal generated by a built-in signal generator according to an embodiment of the present invention. As shown in FIG. 3, the signal is a square wave signal. The signal generator may alternatively be disposed on a preset device of the CPE. The preset device is a device disposed outside the CPU. For example, a 1-KHz signal may be generated by using a slic interface of a voice chip. The CPU controls a frequency and a generation time of the signal. Therefore, such a type of signal is usually an analog signal. FIG. 4 is a schematic diagram of a signal generated by an external signal generator according to an embodiment of the present invention. As shown in FIG. 4, the signal is a sine wave signal.

202: The CPE couples the preset signal to a DSL connected to the CPE.

In this embodiment, after the signal generator generates the preset signal, the CPE may couple the preset signal to the DSL connected to the CPE, or may couple, by using a coupler, the preset signal to the DSL connected to the CPE. Because the DSL link has an outdoor port, lightning protection needs to be performed. The coupler may separate the signal generator/CPU from an external circuit, to protect security of main devices in the signal generator/CPU.

203: The CPE sends the preset signal to the port at the D end of the distribution frame by using the DSL.

In this embodiment, after the preset signal is coupled, by using the coupler, to the DSL connected to the CPE, the preset signal is sent to the port at the D end of the distribution frame by using the DSL, so that the preset signal is detected by using the port connected to the DSL in one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

In the line hunting method described in FIG. 2, when it is detected that the CPE is powered on, the preset signal is generated, and the preset signal is coupled to the DSL connected to the CPE, so that the preset signal is detected by using the port connected to the DSL in the one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

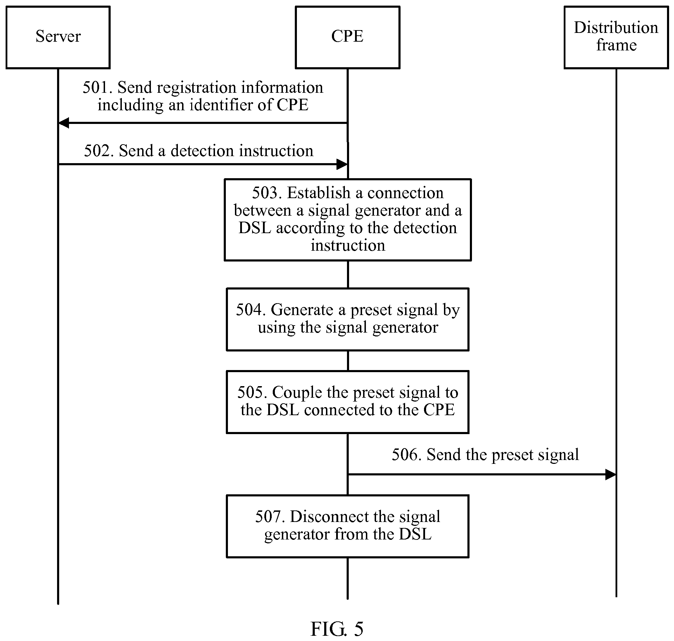

Based on the network architecture shown in FIG. 1, FIG. 5 is a schematic flowchart of another line hunting method according to an embodiment of the present invention. The line hunting method is described from a perspective of the CPE 101, the distribution frame 102, and a server. As shown in FIG. 5, the line hunting method may include the following steps.

501: When detecting that the CPE is powered on, send registration information including an identifier of the CPE to the server.

In this embodiment, the server may control the CPE to generate a preset signal for detection. Therefore, when it is detected that the CPE is powered on, the registration information including the identifier of the CPE may be sent to the server first. The registration information including the identifier of the CPE may be sent to the server by using a Narrowband Internet of Things (Narrowband Internet of Things, NBIoT) module disposed in the CPE. Alternatively, the registration information including the identifier of the CPE may be sent to the server by using a gateway protocol.

502: The server determines whether a DSL service of the CPE is activated, and when the DSL service is not activated, the server sends a detection instruction used to instruct the CPE to perform signal detection to the CPE.

In this embodiment, after receiving the registration information including the identifier of the CPE that is sent by the CPE, the server determines whether the DSL service of the CPE is activated, and when the DSL service is not activated, it indicates that a line between the CPE and the DSLAM is not connected, the detection instruction used to instruct the CPE to perform signal detection is sent to the CPE; or when the DSL service is already activated, it indicates that a line between the CPE and the DSLAM is already connected, and the process ends.

503: The CPE establishes a connection between a signal generator and a DSL according to the detection instruction.

In this embodiment, to avoid impact on data transmission between the CPE and the DSLAM, usually, the signal generator is disconnected from the DSL. Therefore, after receiving the detection instruction used to instruct the CPE to perform signal detection that is sent by the server, the CPE first establishes the connection between the signal generator and the DSL according to the detection instruction.

504: The CPE generates a preset signal by using the signal generator.

In this embodiment, after establishing the connection between the signal generator and the DSL according to the detection instruction, the CPE generates the preset signal. The preset signal may be generated by using the signal generator. The signal generator may be disposed on a CPU of the CPE. To be specific, the signal generator may be disposed on a module or an interface of the CPU. For example, a 1-KHz signal may be generated by controlling high and low electrical levels through general purpose input/output (General Purpose Input/Output, GPIO). Such a type of waveform is a signal simulated directly in a digital manner. The signal is usually a digital signal. FIG. 3 is a schematic diagram of a signal generated by a built-in signal generator according to an embodiment of the present invention. As shown in FIG. 3, the signal is a square wave signal. The signal generator may alternatively be disposed on a preset device of the CPE. The preset device is a device disposed outside the CPU. For example, a 1-KHz signal may be generated by using a slic interface of a voice chip. The CPU controls a frequency and a generation time of the signal. Therefore, such a type of signal is usually an analog signal. FIG. 4 is a schematic diagram of a signal generated by an external signal generator according to an embodiment of the present invention. As shown in FIG. 4, the signal is a sine wave signal.

505: The CPE couples the preset signal to the DSL connected to the CPE.

In this embodiment, after the signal generator generates the preset signal, the CPE may couple the preset signal to the DSL connected to the CPE, or may couple, by using a coupler, the preset signal to the DSL connected to the CPE. Because the DSL link is an outdoor port, lightning protection needs to be performed. The coupler may separate the signal generator/CPU from an external circuit, to protect security of main devices in the signal generator/CPU.

506: The CPE sends the preset signal to the port at the D end of the distribution frame by using the DSL.

In this embodiment, after the preset signal is coupled, by using the coupler, to the DSL connected to the CPE, the preset signal is sent to the port at the D end of the distribution frame by using the DSL, so that the preset signal is detected by using the port connected to the DSL in one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

507: When receiving a DSL signal sent by the DSLAM, or detecting that the DSL service is activated, the CPE disconnects the signal generator from the DSL.

In this embodiment, when the DSL signal sent by the DSLAM is received, or it is detected that the DSL service is activated, to avoid impact on data transmission between the CPE and the DSLAM, the CPE may disconnect the signal generator from the DSL. The CPE may directly disconnect the signal generator from the DSL, or the server may control the CPE to disconnect the signal generator from the DSL.

In this embodiment, the CPE may further be provided with a splitter, configured to split the preset signal and a common DSL signal, to prevent an external signal from interfering with an internal signal generator or circuit in a system connection process.

In the line hunting method described in FIG. 5, when it is detected that the CPE is powered on, the preset signal is generated, and the preset signal is coupled to the DSL connected to the CPE, so that the preset signal is detected by using the port connected to the DSL in the one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without operation from line engineering personnel, thereby improving line hunting efficiency.

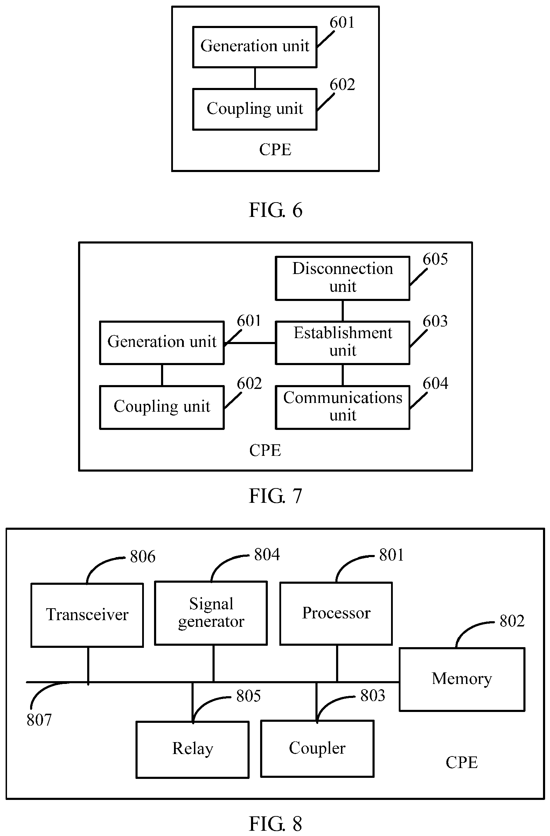

Based on the network architecture shown in FIG. 1, FIG. 6 is a schematic structural diagram of CPE according to an embodiment of the present invention. As shown in FIG. 6, the CPE may include:
a generation unit 601, configured to: when it is detected that the CPE is powered on, generate a preset signal; and
a coupling unit 602, configured to couple the preset signal generated by the generation unit 601 to a digital subscriber line DSL connected to the CPE, so that the preset signal is detected by using a port connected to the DSL in one or more ports of the distribution frame.

In the CPE described in FIG. 6, when it is detected that the CPE is powered on, the preset signal is generated, and the preset signal is coupled to the DSL connected to the CPE, so that the preset signal is detected by using the port connected to the DSL in the one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

Based on the network architecture shown in FIG. 1, FIG. 7 is a schematic structural diagram of another CPE according to an embodiment of the present invention. The CPE shown in FIG. 7 is obtained by optimizing the CPE shown in FIG. 6.

The generation unit 601 is specifically configured to generate the preset signal by using a signal generator, and the signal generator is disposed on a CPU of the CPE, or disposed on a preset device of the CPE.

In a possible implementation, the CPE may further include:
an establishment unit 603, configured to establish a connection between the signal generator and the DSL.

Specifically, after establishing the connection between the signal generator and the DSL, the establishment unit 603 triggers the generation unit 601 to generate the preset signal by using the signal generator.

In a possible implementation, when it is detected that the CPE is powered on, the CPE may further include:
a communications unit 604, configured to: send registration information including an identifier of the CPE to a server, to trigger the server to determine, based on the identifier, whether a DSL service of the CPE is activated, and when the DSL service is not activated, send a detection instruction used to instruct the CPE to perform signal detection to the CPE, where
the communications unit 604 is further configured to: receive the detection instruction, and trigger, according to the detection instruction, the establishment unit 603 to perform the step of establishing a connection between the signal generator and the DSL.

In a possible implementation, the CPE may further include:
a disconnection unit 605, configured to: when receiving a DSL signal sent by the DSLAM, or detecting that the DSL service is activated, disconnect the signal generator from the DSL that is established by the establishment unit 603.

In a possible implementation, the preset signal may be a sine wave signal or a square wave signal at a preset frequency.

In the CPE described in FIG. 7, when it is detected that the CPE is powered on, the preset signal is generated, and the preset signal is coupled to the DSL connected to the CPE, so that the preset signal is detected by using the port connected to the DSL in the one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

Based on the network architecture shown in FIG. 1, FIG. 8 is a schematic structural diagram of another CPE according to an embodiment of the present invention. As shown in FIG. 8, the CPE may include a processor 801, a memory 802, a coupler 803, a signal generator 804, a relay 805, a transceiver 806, and a bus 807. The processor 801 may be a general-purpose central processing unit (CPU), a plurality of CPUs, a microprocessor, an application-specific integrated circuit (application-specific integrated circuit, ASIC), or one or more integrated circuits configured to control execution of a program in this solution of the present invention. The memory 802 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, optical disc storage medium (including a compact disc, a laser disc, an optical disc, a digital versatile disc, a Blu-ray disc, or the like), or magnetic disk storage medium, another magnetic storage device, or any other medium that can be configured to carry or store expected program code in a form of an instruction or a data structure and that can be accessed by a computer, but the present invention is not limited thereto. The memory 802 may exist independently and is connected to the processor 801 by using the bus 807. The memory 802 may alternatively be integrated with the processor 801. The transceiver 806 is configured to communicate with another device or a communications network such as the Ethernet, a radio access network (RAN), or a wireless local area network (Wireless Local Area Network, WLAN). The bus 807 may include a channel, to transmit information between the foregoing components.

The memory 802 stores a group of program code, and the processor 801 is configured to invoke the program code stored in the memory 802, to perform the following operation:
when detecting that the CPE is powered on, generating a preset signal; and
the coupler 803 is configured to couple the preset signal to a DSL connected to the CPE, so that the preset signal is detected by using a port connected to the DSL in one or more ports of the distribution frame.

In a possible implementation, that the processor 801 generates a preset signal includes:
generating, by using the signal generator 804, the preset signal, where the signal generator 804 is disposed on a CPU of the CPE, or disposed on a preset device of the CPE.

In a possible implementation, the relay 805 is configured to establish a connection between the signal generator 804 and the DSL.

In a possible implementation, when it is detected that the CPE is powered on, the transceiver 806 is configured to:
send registration information including an identifier of the CPE to a server, to trigger the server to determine, based on the identifier, whether a DSL service of the CPE is activated, and when the DSL service is not activated, send a detection instruction used to instruct the CPE to perform signal detection to the CPE; and
receive the detection instruction and send the detection instruction to the processor 801; and
that the relay 805 establishes a connection between the signal generator 804 and the DSL includes:
   the relay 805 establishes the connection between the signal generator 804 and the DSL according to the detection instruction.

In a possible implementation, the relay 805 is further configured to: when receiving a DSL signal sent by the DSLAM, or detecting that the DSL service is activated, disconnect the connection between the signal generator 804 and the DSL.

In a possible implementation, the preset signal may be a sine wave signal or a square wave signal at a preset frequency.

Step 201 and step 504 may be performed by the signal generator 804 in the CPE, step 202 and step 505 may be performed by the coupler 803 in the CPE, step 203, step 501, and step 506 may be performed by the transceiver 806 in the CPE, and step 503 and step 507 may be performed by the relay 805 in the CPE. The generation unit 601 may be implemented by using the signal generator 804 in the CPE, the coupling unit 602 may be implemented by using the coupler 803 in the CPE, the establishment unit 603 and the disconnection unit 605 may be implemented by using the relay 805 in the CPE, and the communications unit 604 may be implemented by using the transceiver 806 in the CPE.

In the CPE described in FIG. 8, when it is detected that the CPE is powered on, the preset signal is generated, and the preset signal is coupled to the DSL connected to the CPE, so that the preset signal is detected by using the port connected to the DSL in the one or more ports of the distribution frame. Therefore, it is determined that the port of the distribution frame is the other end of the DSL connected to the CPE, to further determine the DSL used by the CPE. It can be learned that when the CPE is powered on, the CPE generates a signal for testing without needing participation of line engineering personnel, thereby improving line hunting efficiency.

An embodiment of the present invention further discloses a readable storage medium. The readable storage medium stores program code used by the CPE to perform the line hunting method shown in FIG. 2 and FIG. 5.

A person of ordinary skill in the art may understand that all or some of the procedures of the methods in the embodiments may be implemented by a computer program instructing relevant hardware. The program may be stored in a computer readable storage medium. When the program is run, the procedures of the methods in the embodiments are performed. The foregoing storage medium may include a magnetic disc, an optical disc, a read-only memory (Read-Only Memory, ROM), a random access memory (Random Access Memory, RAM), or the like.

The line hunting method and the customer premises equipment provided in the embodiments of the present invention are described above in detail. Although the principles and implementations of the present invention are described by using specific examples in this specification, the descriptions of the foregoing embodiments are only intended to help understand the method and core ideas of the present invention. Meanwhile, a person of ordinary skill in the art may make modifications to the specific implementations and application scopes based on the ideas of the present invention. In conclusion, the content of the specification should not be construed as a limitation to the present invention.

## Claims

1. A line hunting method, wherein the method is applied to a customer premises equipment, CPE, and comprises:
when detecting that the CPE is powered on, generating a preset signal (201); and
coupling the preset signal to a digital subscriber line, DSL, connected to the CPE (202), so that the preset signal is detected by using a port connected to the DSL in one or more ports of a distribution frame;
wherein the generating a preset signal comprises:
generating, by using a signal generator, the preset signal (504), wherein the signal generator is disposed on a central processing unit, CPU, of the CPE, or disposed on a preset device of the CPE; the method being **characterized by** further comprising:
after the coupling step, sending (203), by the CPE, the preset signal to the port of the distribution frame using the DSL so that the preset signal is detected by using the port connected to the DSL in one or more ports of the distribution frame.

2. The method according to claim 1, wherein the method further comprises:
establishing a connection between the signal generator and the DSL (503).

3. The method according to claim 2, wherein when it is detected that the CPE is powered on, the method further comprises:
sending registration information comprising an identifier of the CPE to a server (501), to trigger the server to determine, based on the identifier, whether a DSL service of the CPE is activated, and when the DSL service is not activated, sending a detection instruction used to instruct the CPE to perform signal detection to the CPE (502); and
receiving the detection instruction, and performing, according to the detection instruction, the step of establishing a connection between the signal generator and the DSL.

4. The method according to claim 3, wherein the method further comprises:
when receiving a DSL signal sent by a digital subscriber line access multiplexer, DSLAM, or detecting that the DSL service is activated, disconnecting the signal generator from the DSL.

5. The method according to any one of claims 1 to 4, wherein the preset signal is a sine wave signal or a square wave signal at a preset frequency.

6. A Customer premises equipment, CPE, comprising:
a generation unit (601), configured to: when it is detected that the CPE is powered on, generate a preset signal, wherein the generation unit (601) is specifically configured to generate the preset signal by using a signal generator, wherein the signal generator is disposed on a central processing unit, CPU, of the CPE, or disposed on a preset device of the CPE;
a coupling unit (602), configured to couple the preset signal generated by the generation unit to a digital subscriber line, DSL, connected to the CPE, so that the preset signal is detected by using a port connected to the DSL in one or more ports of a distribution frame;
the CPE being **characterized by** being configured to:
after the preset signal has been coupled, send the preset signal to the port of the distribution frame by using the DSL so that the preset signal is detected by using the port connected to the DSL in one or more ports of the distribution frame.

7. The CPE according to claim 6, wherein the CPE further comprises:
an establishment unit (603), configured to establish a connection between the signal generator and the DSL.

8. The CPE according to claim 7, wherein when it is detected that the CPE is powered on, the CPE further comprises:
a communications unit (604), configured to: send registration information comprising an identifier of the CPE to a server, to trigger the server to determine, based on the identifier, whether a DSL service of the CPE is activated, and when the DSL service is not activated, send a detection instruction used to instruct the CPE to perform signal detection to the CPE, wherein
the communications unit is further configured to: receive the detection instruction, and trigger, according to the detection instruction, the establishment unit to perform the step of establishing a connection between the signal generator and the DSL.

9. The CPE according to claim 8, wherein the CPE further comprises:
a disconnection unit (605), configured to: when receiving a DSL signal sent by a digital subscriber line access multiplexer, DSLAM, or detecting that the DSL service is activated, disconnect the signal generator from the DSL that is established by the establishment unit.

10. The CPE according to any one of claims 6 to 9, wherein the preset signal is a sine wave signal or a square wave signal at a preset frequency.

11. A Customer premises equipment, CPE, comprising a processor (801), a memory (802), and a coupler (803), wherein
the memory (802) is adapted to store a group of program code, and the processor is configured to invoke the program code stored in the memory, to perform the following operation:
when detecting that the CPE is powered on, generating a preset signal; and
the coupler (803) is configured to couple the preset signal to a digital subscriber line, DSL, connected to the CPE, so that the preset signal is detected by using a port connected to the DSL in one or more ports of a distribution frame,
wherein the CPE further comprises a signal generator (804); and that the processor is adapted to generate a preset signal comprising:
generating, by using the signal generator, the preset signal, wherein the signal generator is disposed on a central processing unit, CPU of the CPE, or disposed on a preset device of the CPE; the CPE being **characterized by** being configured to: after the preset signal has been coupled, send the preset signal to the port of the distribution frame by using the DSL so that the preset signal is detected by using the port connected to the DSL in one or more ports of the distribution frame.

12. The CPE according to claim 11, wherein the CPE further comprises a relay (805), wherein
the relay is configured to establish a connection between the signal generator and the DSL.

13. The CPE according to claim 12, wherein the CPE further comprises a transceiver (806), and when it is detected that the CPE is powered on, the transceiver is configured to:
send registration information comprising an identifier of the CPE to a server, to trigger the server to determine, based on the identifier, whether a DSL service of the CPE is activated, and when the DSL service is not activated, send a detection instruction used to instruct the CPE to perform signal detection to the CPE; and
receive the detection instruction and send the detection instruction to the processor; and
that the relay establishes a connection between the signal generator and the DSL comprises:
the relay establishes the connection between the signal generator and the DSL according to the detection instruction.

14. The CPE according to claim 13, wherein the relay is further configured to: when receiving a DSL signal sent by a digital subscriber line access multiplexer, DSLAM, or detecting that the DSL service is activated, disconnect the signal generator from the DSL.

15. The CPE according to any one of claims 11 to 14, wherein the preset signal is a sine wave signal or a square wave signal at a preset frequency.

## Patentansprüche

1. Leitungssuchverfahren, wobei das Verfahren auf eine kundeneigene Einrichtung (*customer premises equipment-* CPE) angewendet wird und Folgendes umfasst:
wenn erfasst wird, dass die CPE eingeschaltet ist, Erzeugen eines voreingestellten Signals (201); und
Koppeln des voreingestellten Signals an eine digitale Teilnehmerleitung (*digital subscriber line-* DSL), die mit der CPE (202) verbunden ist, so dass das voreingestellte Signal durch Verwenden eines Ports, der mit der DSL verbunden ist, in einem oder mehreren Ports eines Verteilergestells erfasst wird;
wobei das Erzeugen eines voreingestellten Signals Folgendes umfasst:
Erzeugen, durch Verwenden eines Signalerzeugers, des voreingestellten Signals (504), wobei der Signalerzeuger auf einer Zentraleinheit (*central processing unit -* CPU) der CPE oder auf einer voreingestellten Vorrichtung der CPE angeordnet ist;
wobei das Verfahren durch Folgendes gekennzeichnet ist:
nach dem Kopplungsschritt, Senden (203) des voreingestellten Signals, durch die CPE, durch Verwenden der DSL an den Port des Verteilergestells, so dass das voreingestellte Signal durch Verwenden des Ports, der mit der DSL verbunden ist, in einem oder mehreren Ports des Verteilergestells erfasst wird.

2. Verfahren nach Anspruch 1, wobei das Verfahren ferner Folgendes umfasst:
Einrichten einer Verbindung zwischen dem Signalerzeuger und der DSL (503).

3. Verfahren nach Anspruch 2, wobei, wenn erfasst wird, dass die CPE eingeschaltet ist, das Verfahren ferner Folgendes umfasst:
Senden von Registrierungsinformationen, die eine Kennung der CPE an einen Server (501) umfassen, um den Server zu veranlassen, basierend auf der Kennung zu bestimmen, ob ein DSL-Dienst der CPE aktiviert ist, und, wenn der DSL-Dienst nicht aktiviert ist, Senden einer Erfassungsanweisung, die verwendet wird, um die CPE anzuweisen, eine Signalerfassung durchzuführen, an die CPE (502); und
Empfangen der Erfassungsanweisung und Durchführen des Schritts des Einrichtens einer Verbindung zwischen dem Signalerzeuger und der DSL gemäß der Erfassungsanweisung.

4. Verfahren nach Anspruch 3, wobei das Verfahren ferner Folgendes umfasst:
wenn ein DSL-Signal empfangen wird, das durch einen DSL-Anschlussleitungsmultiplexer (*digital subscriber line access multiplexer-* DSLAM) gesendet wird, oder erfasst wird, dass der DSL-Dienst aktiviert ist, Trennen des Signalerzeugers von der DSL.

5. Verfahren nach einem der Ansprüche 1 bis 4, wobei das voreingestellte Signal ein Sinuswellensignal oder ein Rechtecksignal mit einer voreingestellten Frequenz ist.

6. Kundeneigene Einrichtung (CPE), die Folgendes umfasst:
eine Erzeugungseinheit (601), die für Folgendes konfiguriert ist: wenn erfasst wird, dass die CPE eingeschaltet ist, Erzeugen eines voreingestellten Signals, wobei die Erzeugungseinheit (601) spezifisch konfiguriert ist, um das voreingestellte Signal durch Verwenden eines Signalerzeugers zu erzeugen, wobei der Signalerzeuger auf einer Zentraleinheit (CPU) der CPE oder auf einer voreingestellten Vorrichtung der CPE angeordnet ist;
eine Kopplungseinheit (602), die konfiguriert ist, um das voreingestellte Signal, das durch die Erzeugungseinheit erzeugt wird, an eine digitale Teilnehmerleitung (DSL) zu koppeln, die mit der CPE verbunden ist, so dass das voreingestellte Signal durch Verwenden eines Ports, der mit der DSL verbunden ist, in einem oder mehreren Ports eines Verteilergestells erfasst wird;
wobei die CPE **dadurch gekennzeichnet ist, dass** sie für Folgendes konfiguriert ist:
nachdem das voreingestellte Signal gekoppelt wurden ist, Senden des voreingestellten Signals durch Verwenden der DSL an den Port des Verteilergestells, so dass das voreingestellte Signal durch Verwenden des Ports, der mit der DSL verbunden ist, in einem oder mehreren Ports des Verteilergestells erfasst wird.

7. CPE nach Anspruch 6, wobei die CPE ferner Folgendes umfasst:
eine Einrichtungseinheit (603), die konfiguriert ist, um eine Verbindung zwischen dem Signalerzeuger und der DSL einzurichten.

8. CPE nach Anspruch 7, wobei, wenn erfasst wird, dass die CPE eingeschaltet ist, die CPE ferner Folgendes umfasst:
eine Kommunikationseinheit (604), konfiguriert für Folgendes: Senden von Registrierungsinformationen, die eine Kennung der CPE umfassen, an einen Server, um den Server zu veranlassen, basierend auf der Kennung zu bestimmen, ob ein DSL-Dienst der CPE aktiviert ist, und, wenn der DSL-Dienst nicht aktiviert ist, Senden einer Erfassungsanweisung, die verwendet wird, um die CPE anzuweisen, eine Signalerfassung durchzuführen, an die CPE, wobei
die Kommunikationseinheit ferner für Folgendes konfiguriert ist: Empfangen der Erfassungsanweisung und Auslösen der Einrichtungseinheit gemäß der Erfassungsanweisung, um den Schritt des Einrichtens einer Verbindung zwischen dem Signalerzeuger und der DSL durchzuführen.

9. CPE nach Anspruch 8, wobei die CPE ferner Folgendes umfasst:
eine Trenneinheit (605), die für Folgendes konfiguriert ist: wenn ein DSL-Signal empfangen wird, das durch einen DSL-Anschlussleitungsmultiplexer (DSLAM) gesendet wird, oder erfasst wird, dass der DSL-Dienst aktiviert ist, Trennen des Signalerzeugers von der DSL, die durch die Einrichtungseinheit eingerichtet wird.

10. CPE nach einem der Ansprüche 6 bis 9, wobei das voreingestellte Signal ein Sinuswellensignal oder ein Rechtecksignal mit einer voreingestellten Frequenz ist.

11. Kundeneigene Einrichtung (CPE), die einen Prozessor (801), einen Speicher (802) und einen Koppler (803) umfasst, wobei der Speicher (802) geeignet ist, um eine Gruppe von Programmcode zu speichern, und der Prozessor konfiguriert ist, um den Programmcode, der in dem Speicher gespeichert ist, aufzurufen, um die folgende Betriebe durchzuführen:
wenn erfasst wird, dass die CPE eingeschaltet ist, Erzeugen eines voreingestellten Signals; und
wobei der Koppler (803) konfiguriert ist, um das voreingestellte Signal an eine digitale Teilnehmerleitung (DSL) zu koppeln, die mit der CPE verbunden ist, so dass das voreingestellte Signal durch Verwenden eines Ports, der mit der DSL verbunden ist, in einem oder mehreren Ports eines Verteilergestells erfasst wird,
wobei die CPE ferner einen Signalerzeuger (804) umfasst; und dass der Prozessor geeignet ist, um ein voreingestelltes Signal zu erzeugen, der Folgendes umfasst:
Erzeugen, durch Verwenden des Signalerzeugers, des voreingestellten Signals, wobei der Signalerzeuger auf einer Zentraleinheit (CPU) der CPE oder auf einer voreingestellten Vorrichtung der CPE angeordnet ist; wobei die CPE **dadurch gekennzeichnet ist, dass** sie für Folgendes konfiguriert ist:
nachdem das voreingestellte Signal gekoppelt wurden ist, Senden des voreingestellten Signals durch Verwenden der DSL an den Port des Verteilergestells, so dass das voreingestellte Signal durch Verwenden des Ports, der mit der DSL verbunden ist, in einem oder mehreren Ports des Verteilergestells erfasst wird.

12. CPE nach Anspruch 11, wobei die CPE ferner ein Relais (805) umfasst, wobei das Relais konfiguriert ist, um eine Verbindung zwischen dem Signalerzeuger und der DSL einzurichten.

13. CPE nach Anspruch 12, wobei die CPE ferner einen Sendeempfänger (806) umfasst, und, wenn erfasst wird, dass die CPE eingeschaltet ist, der Sendeempfänger zu Folgendem konfiguriert ist:
Senden von Registrierungsinformationen, die eine Kennung der CPE umfassen, an einen Server, um den Server zu veranlassen, basierend auf der Kennung zu bestimmen, ob ein DSL-Dienst der CPE aktiviert ist, und, wenn der DSL-Dienst nicht aktiviert ist, Senden einer Erfassungsanweisung, die verwendet wird, um die CPE anzuweisen, eine Signalerfassung durchzuführen, an die CPE; und
Empfangen der Erfassungsanweisung und Senden der Erfassungsanweisung an den Prozessor; und
dass das Relais eine Verbindung zwischen dem Signalerzeuger und der DSL einrichtet, das Folgendes umfasst:
Einrichten der Verbindung zwischen dem Signalerzeuger und der DSL durch das Relais gemäß der Erfassungsanweisung.

14. CPE nach Anspruch 13, wobei das Relais ferner für Folgendes konfiguriert ist: wenn ein DSL-Signal empfangen wird, das durch einen DSL-Anschlussleitungsmultiplexer (DSLAM) gesendet wird, oder erfasst wird, dass der DSL-Dienst aktiviert ist, Trennen des Signalerzeugers von der DSL.

15. CPE nach einem der Ansprüche 11 bis 14, wobei das voreingestellte Signal ein Sinuswellensignal oder ein Rechtecksignal mit einer voreingestellten Frequenz ist.

## Revendications

1. Procédé de recherche de ligne, le procédé étant appliqué à un équipement de locaux de client, CPE, et comprenant :
lors de la détection de la mise sous tension du CPE, la génération d'un signal prédéfini (201) ; et
le couplage du signal prédéfini à une ligne d'abonné numérique, DSL, connectée au CPE (202), de sorte que le signal prédéfini est détecté à l'aide d'un port connecté à la DSL dans un ou plusieurs ports d'un répartiteur ;
la génération d'un signal prédéfini comprenant :
la génération, à l'aide d'un générateur de signal, du signal prédéfini (504), le générateur de signal étant disposé sur une unité centrale de traitement, CPU, du CPE, ou disposé sur un dispositif prédéfini du CPE ;
le procédé étant **caractérisé en ce qu'**il comprend en outre :
après l'étape de couplage, l'envoi (203), par le CPE, du signal prédéfini au port du répartiteur à l'aide de la DSL de sorte que le signal prédéfini est détecté à l'aide du port connecté à la DSL dans un ou plusieurs ports du répartiteur.

2. Procédé selon la revendication 1, le procédé comprenant en outre :
l'établissement d'une connexion entre le générateur de signal et la DSL (503).

3. Procédé selon la revendication 2, lorsque la mise sous tension du CPE est détectée, le procédé comprenant en outre :
l'envoi d'informations d'enregistrement comprenant un identifiant du CPE à un serveur (501), pour déclencher la détermination par le serveur, en fonction de l'identifiant, du fait de savoir si un service DSL du CPE est activé, et lorsque le service DSL n'est pas activé, l'envoi d'une instruction de détection, utilisée pour donner instruction au CPE de réaliser une détection de signal, au CPE (502) ; et
la réception de l'instruction de détection, et la réalisation, selon l'instruction de détection, l'étape consistant à établir une connexion entre le générateur de signal et la DSL.

4. Procédé selon la revendication 3, le procédé comprenant en outre :
lors de la réception d'un signal DSL envoyé par un multiplexeur d'accès à la ligne d'abonné numérique, DSLAM, ou lors de la détection du fait que le service DSL est activé, la déconnexion du générateur de signal de la DSL.

5. Procédé selon l'une quelconque des revendications 1 à 4, le signal prédéfini étant un signal sinusoïdal ou un signal carré à une fréquence prédéfinie.

6. Équipement de locaux de client, CPE, comprenant :
une unité de génération (601), configurée pour : lorsque la mise sous tension du CPE est détectée, générer un signal prédéfini, l'unité de génération (601) étant spécifiquement configurée pour générer le signal prédéfini à l'aide d'un générateur de signal, le générateur de signal étant disposé sur une unité centrale de traitement, CPU, du CPE, ou disposé sur un dispositif prédéfini du CPE ;
une unité de couplage (602), configurée pour coupler le signal prédéfini généré par l'unité de génération à une ligne d'abonné numérique, DSL, connectée au CPE, de sorte que le signal prédéfini est détecté à l'aide d'un port connecté à la DSL dans un ou plusieurs ports d'un répartiteur ;
le CPE étant **caractérisé en ce qu'**il est configuré pour :
après que le signal prédéfini a été couplé, envoyer le signal prédéfini au port du répartiteur à l'aide de la DSL de sorte que le signal prédéfini est détecté à l'aide du port connecté à la DSL dans un ou plusieurs ports du répartiteur.

7. CPE selon la revendication 6, le CPE comprenant en outre :
une unité d'établissement (603), configurée pour établir une connexion entre le générateur de signal et la DSL.

8. CPE selon la revendication 7, lorsque la mise sous tension du CPE est détectée, le CPE comprenant en outre :
une unité de communication (604), configurée pour : envoyer des informations d'inscription comprenant un identifiant du CPE à un serveur, pour déclencher la détermination par le serveur, en fonction de l'identifiant, du fait de savoir si un service DSL du CPE est activé, et lorsque le service DSL n'est pas activé, envoyer une instruction de détection, utilisée pour donner instruction au CPE de réaliser une détection de signal, au CPE,
l'unité de communication étant en outre configurée pour : recevoir l'instruction de détection, et déclencher, selon l'instruction de détection, l'unité d'établissement pour réaliser l'étape d'établissement d'une connexion entre le générateur de signal et la DSL.

9. CPE selon la revendication 8, le CPE comprenant en outre :
une unité de déconnexion (605), configurée pour : lors de la réception d'un signal DSL envoyé par un multiplexeur d'accès de ligne d'abonné numérique, DSLAM, ou lors de la détection du fait que le service DSL est activé, déconnecter le générateur de signal de la DSL qui est établi par l'unité d'établissement.

10. CPE selon l'une quelconque des revendications 6 à 9, le signal prédéfini étant un signal sinusoïdal ou un signal carré à une fréquence prédéfinie.

11. Équipement de locaux de client, CPE, comprenant un processeur (801), une mémoire (802) et un coupleur (803),
la mémoire (802) étant apte à stocker un groupe de code de programme, et le processeur étant configuré pour invoquer le code programme stocké dans la mémoire, pour réaliser l'opération suivante :
lorsque la mise sous tension du CPE est détectée, générer un signal prédéfini ; et
le coupleur (803) étant configuré pour coupler le signal prédéfini à une ligne d'abonné numérique, DSL, connectée au CPE, de sorte que le signal prédéfini est détecté à l'aide d'un port connecté à la DSL dans un ou plusieurs ports d'un répartiteur, le CPE comprenant en outre un générateur de signal (804) ; et
l'aptitude du processeur à générer un signal prédéfini comprenant :
la génération, à l'aide du générateur de signal, le signal prédéfini, le générateur de signal étant disposé sur une unité centrale de traitement, CPU, du CPE, ou disposé sur un dispositif prédéfini du CPE ;
le CPE étant **caractérisé en ce qu'**il est configuré pour :
après que le signal prédéfini a été couplé, envoyer le signal prédéfini au port du répartiteur à l'aide de la DSL de sorte que le signal prédéfini est détecté à l'aide du port connecté à la DSL dans un ou plusieurs ports du répartiteur.

12. CPE selon la revendication 11, le CPE comprenant en outre un relais (805), le relais étant configuré pour établir une connexion entre le générateur de signal et la DSL.

13. CPE selon la revendication 12, le CPE comprenant en outre un émetteur-récepteur (806), et lorsque la mise sous tension du CPE est détectée, l'émetteur-récepteur étant configuré pour :
envoyer des informations d'inscription comprenant un identifiant du CPE à un serveur, pour déclencher la détermination par le serveur, en fonction de l'identifiant, du fait de savoir si un service DSL du CPE est activé, et lorsque le service DSL n'est pas activé, envoyer une instruction de détection, utilisée pour donner instruction au CPE de réaliser une détection de signal, au CPE ; et
recevoir l'instruction de détection et envoyer l'instruction de détection au processeur ; et
l'établissement par le relais d'une connexion entre le générateur de signal et la DSL comprenant :
le fait que le relais établit la connexion entre le générateur de signal et la DSL selon l'instruction de détection.

14. CPE selon la revendication 13, le relais étant en outre configuré pour : lors de la réception d'un signal DSL envoyé par un multiplexeur d'accès à la ligne d'abonné numérique, DSLAM, ou lors de la détection que le service DSL est activé, déconnecter le générateur de signal de la DSL.

15. CPE selon l'une quelconque des revendications 11 à 14, le signal prédéfini étant un signal sinusoïdal ou un signal carré à une fréquence prédéfinie.
